## Europäisches Patentamt
## European Patent Office
## Office européen des brevets

(19)

(11) Veröffentlichungsnummer : **0 193 703**
**B1**

(12)

# EUROPÄISCHE PATENTSCHRIFT

(45) Veröffentlichungstag der Patentschrift :
05.04.89

(21) Anmeldenummer : 86100330.9

(22) Anmeldetag : 13.01.86

(51) Int. Cl.⁴ : **F 16 H   1/44**, F 16 H   1/455, F 16 D 35/00

(54) Allradantrieb für ein Kraftfahrzeug.

(30) Priorität : 02.03.85 DE 3507491

(43) Veröffentlichungstag der Anmeldung :
10.09.86 Patentblatt 86/37

(45) Bekanntmachung des Hinweises auf die Patenterteilung : 05.04.89 Patentblatt 89/14

(84) Benannte Vertragsstaaten :
AT CH DE FR GB IT LI NL SE

(56) Entgegenhaltungen :
BE–A–   395 537
DE–A– 2 135 791
DE–A– 2 209 879
FR–A– 1 314 336
GB–A– 2 139 972
US–A– 1 976 071

(73) Patentinhaber : Dr.Ing.h.c. F. Porsche Aktiengesellschaft
Porschestrasse 42
D-7000 Stuttgart 40 (DE)

(72) Erfinder : Müller, Robert
Badstrasse 21
D-7251 Mönsheim (DE)

EP 0 193 703 B1

## Beschreibung

Die Erfindung betrifft einen Allradantrieb für ein Kraftfahrzeug nach dem Oberbegriff des Anspruchs 1.

Eine ähnliche Getriebeanordnung ist aus DE-A-2 209 879 bekannt. Dort ist einer Flüssigkeitsreibungskupplung mit ineinander greifenden konzentrischen Rippen eine Lamellenkupplung über einen besonders gestalteten Freilauf nachgeschaltet. Die Lamellen der Lamellenkupplung werden zusammengepreßt, wenn das Übertragungsmoment der Flüssigkeitsreibungskupplung die Anpreßkraft einer Feder übersteigt. Da das Übertragungsmoment proportional zur Drehzahldifferenz ist, erfolgt die Allradzuschaltung der zweiten Achse indirekt auch in Abhängigkeit von der Drehzahldifferenz beider Achsen. Das komplizierte Zusammenwirken von Übertragungsmomenten bzw. Stellbewegungen an der Flüssigkeitsreibungskupplung am Freilauf und der Lamellenkupplung macht Sonderausführungen für diese Getriebeteile erforderlich und beeinträchtigt die Funktionssicherheit des Allradantriebs.

Es ist die Aufgabe der Erfindung, einen gattungsgemäßen Allradantrieb in der Weise weiterzubilden, daß Getriebeteile verwendbar sind, die als langjährig erprobte, handelsübliche Massenartikel zur Verfügung stehen.

Zur Lösung dieser Aufgabe dienen die kennzeichnenden Merkmale des Anspruchs 1. Für alle Getriebeteile eines derartigen Allradantriebs sind kostengünstig erhältliche Massenartikel verwendbar, die auch eine ausreichende Gewähr für Funktionssicherheit im Dauerbetrieb bieten. Da die Allradzuschaltung unmittelbar über die Drehzahldifferenz erfolgt, wird das Gesamtsystem leicht überschaubar und bereitet bei der Auslegung und Feineinstellung wenig Schwierigkeiten. Wenn nur die direkt mit dem Eingangzahnrad verbundenen Innenlamellen für die Drehmomentübertragung zu den Außenlamellen wirksam sind, arbeitet die Kupplung nach einem flach ansteigenden Kurvenast. Erreicht nun die Drehzahldifferenz eine bestimmte Größe, dann greift der Freilauf drehmomentübertragend und über ihn werden auch die restlichen Innenlamellen zugeschaltet ; ab hier arbeitet die Kupplung im steil ansteigenden Kurvenast.

Der Umschaltpunkt ist durch Wahl der Übersetzung im Reduziergetriebe festlegbar. Auf diese Weise wird angenähert eine gewünschte progressive Gesamtkennlinie erzielt.

Alternativ hierzu können auch nach Anspruch 3 alle Innenlamellen direkt über das Eingangszahnrad mit der Antriebswelle starr verbunden sein.

Durch eine andere konstruktive Bemessung der Kupplung ergibt sich über einen sehr weiten Bereich der Drehzahldifferenz eine sanft degressiv ansteigende Kurve. Ab einer vorwählbaren Drehzahldifferenz geht diese Kurve in eine Senkrechte über, so daß ab hier ein starrer Durchtrieb bzw. Vollsperrung vorliegt.

Beide Ausführungsformen der Erfindung sind in der Zeichnung dargestellt und werden nachfolgend erläutert.

Es zeigt

Fig. 1 Allradantrieb mit 2-stufiger Viskokupplung,

Fig. 2 Drehmoment-Drehzahldifferenz-Kennlinie zu Fig. 1,

Fig. 3 Allradantrieb mit schlupfabhängiger Vollsperrung,

Fig. 4 Drehmoment-Drehzahldifferenz-Kennlinie zu Fig. 3.

Bei einem frontgetriebenen Kraftfahrzeug mit Allradantrieb ist die Vorderachse direkt vom Gangschaltgetriebe angetrieben. Von der Vorderachse führt eine Antriebswelle 1 zu einem Eingangszahnrad 2 eines Reduziergetriebes 3, an dem eine koaxiale Zentralwelle 4 befestigt ist, die Innenlamellen 5 einer Viskokupplung 6 trägt.

Die anderen Innenlamellen 7 sind mit einem Freilauf 8 starr verbunden, dessen Außenzahnrad 9 mit einem Zahnrad 10 kämmt, das gemeinsam mit einem weiteren Zahnrad 11 auf einer zur Zentralwelle 4 parallel gelagerten Welle fixiert und vom Eingangszahnrad 2 getrieben ist. Zwischen die Innenlamellen 5 und 7 greifen Außenlamellen 12 ein, die innen an einem Kupplungsgehäuse 13 angebracht sind, das mit Flüssigkeit hoher Viskosität gefüllt ist. Bei einem Schlupf zwischen den Innenlamellen und den Außenlamellen wird Drehmoment auf das Kupplungsgehäuse und die an ihr befestigte Abtriebswelle 14 zur Hinterachse übertragen. Ist die Drehzahldifferenz n1-n2 gering, so hat die Viskokupplung eine Kennlinie entsprechend dem Kurvenast a der Fig. 2, die für normale Straßen- und Fahrverhältnisse gilt. Die Innenlamellen 7 sind hierbei über den Freilauf abgekoppelt und tragen nicht zum Drehmoment Md bei. Ab einem bestimmten Schlupfwert greift der Freilauf drehmomentübertragend und nimmt die Innenlamellen 7 mit. Diese sorgen nun für eine sprunghafte Drehmomenterhöhung, wodurch sich eine steilere Kennlinie nach Kurvenast b ergibt.

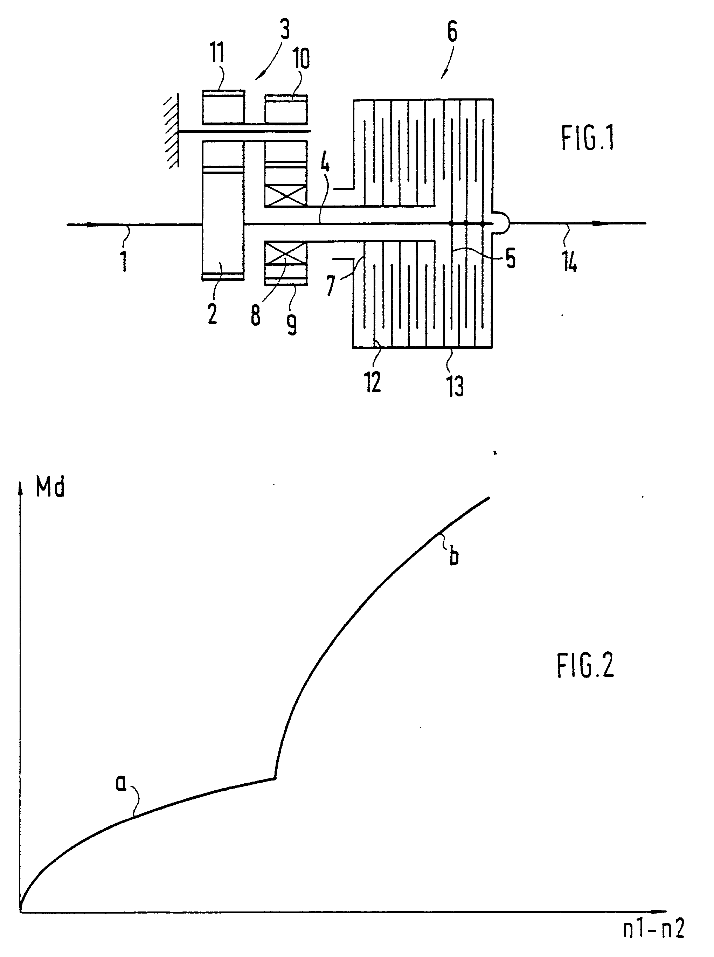

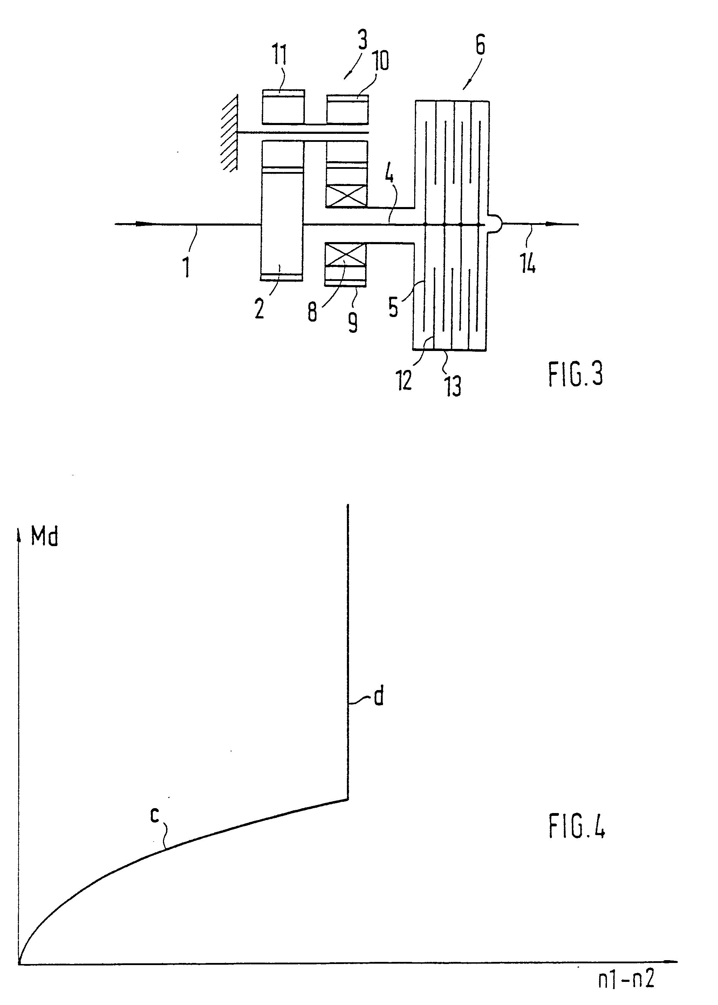

Bei einer weiteren Ausführungsform der Erfindung entsprechend Fig. 3 sind alle Innenlamellen 5 und 7 an der Zentralwelle angebracht. Hier ergibt sich, wie Fig. 4 zeigt, eine flach degressive Kennlinie c, die bei einem verhältnismäßig hohen Schlupfwert in eine Senkrechte d übergeht. Die so bewirkte Vollsperrung kann bei extremen Fahrbedingungen, beispielsweise wenn auf Schnee nach längerem Parken, eventuell bergauf mit Anhänger angefahren werden soll oder wenn an der Hinterachse Schneeketten montiert sind, erfolgen.

## Patentansprüche

1. Allradantrieb für ein Kraftfahrzeug, mit einer im Antriebsstrang Vorderachse-Hinterachse angeordneten Lamellenkupplung (6), deren Innenlamellen (5, 7) auf die Außenlamellen (12) ein mit der Drehzahldifferenz zwischen Vorderachse (1) und Hinterachse (14) ansteigendes Drehmoment übertragen, wobei der Lamellenkupplung ein Reduziergetriebe (3) über einen Freilauf (8) in der Weise vorgeschaltet ist, daß bei einer vorgebbaren Drehzahldifferenz die Drehmoment-Drehzahldifferenz-Kennlinie von einem flach ansteigenden Kurvenast in einen steiler ansteigenden Kurvenast selbsttätig übergeht (Fig. 2), dadurch gekennzeichnet, daß das Reduziergetriebe (3) aus Stirnzahnrädern mit einem Eingangszahnrad (2) und einem parallel dazu gelagerten Räderpaar (10, 11) kleinerer Zähnezahl aufgebaut ist, das ein am Freilauf (8) angebrachtes Zahnrad (9) antreibt, wobei das Eingangszahnrad (2) einerseits mit einer Antriebswelle (1) getrieben ist, andererseits über eine zu ihr koaxiale Zentralwelle (4) mit Innenlamellen (5, 7 ; 5) starr verbunden ist, und daß das mit den Außenlamellen (12) versehene Kupplungsgehäuse (13) mit einer Antriebswelle (14) verbunden ist.

2. Allradantrieb nach Anspruch 1, dadurch gekennzeichnet, daß die einen Innenlamellen (5) mit dem Eingangszahnrad (2), die anderen Innenlamellen (7) mit dem Freilauf (8) starr verbunden sind (Fig. 1).

3. Allradantrieb nach Anspruch 1, dadurch gekennzeichnet, daß alle Innenlamellen (5) mit dem Eingangszahnrad (2) umlaufen und daß der Freilauf (8) mit dem Kupplungsgehäuse (13) verbunden ist (Fig. 3).

4. Allradantrieb nach einem der Ansprüche 1 bis 3, dadurch gekennzeichnet, daß als Lamellenkupplung (6) eine Viskokupplung (6) verwendet wird, in der durch Flüssigkeits-Scherkräfte zwischen Innenlamellen und Außenlamellen ein mit der Drehzahldifferenz ansteigendes Drehmoment aufgebaut ist.

5. Allradantrieb nach einem der Ansprüche 1 bis 3, dadurch gekennzeichnet, daß in der Lamellenkupplung (6) das Drehmoment durch mechanische Reibung der an den Innenlamellen anliegenden Außenlamellen (12) übertragen wird.

## Claims

1. All-wheel drive for a motor vehicle, with a disc clutch (6) located in the front axle/back axle transmission line, whereof the inner discs (5, 7) transmit to the outer discs (12) a torque which increases with the difference in speed between the front axle (1) and the back axle (14), the disc clutch being preceded by reduction gearing (3) by way of a freewheel (8) in such a way that for a predetermined speed difference, the torque/speed difference characteristic automatically changes from a gently rising curve into a more steeply rising curve (Figure 2), characterised in that the reduction gearing (3) is made up of spur gears with an input gear (2) and a pair of gears (10, 11) with a smaller number of teeth mounted parallel thereto, which drives a gear (9) located on the freewheel (8), the inlet gear (2) being driven at one side by a drive shaft (1), at the other side being rigidly connected to inner discs (5, 7 ; 5) by way of a central shaft (4) coaxial therewith and that the clutch housing (13) provided with the outer discs (12) is connected to a drive shaft (14).

2. All-wheel drive according to Claim 1, characterised in that some inner discs (5) are rigidly connected to the input gear (2), the other inner discs (7) being rigidly connected to the freewheel (8) (Figure 1).

3. All-wheel drive according to Claim 1, characterised in that all the inner discs (5) rotate with the input gear (2) and that the freewheel (8) is connected to the clutch housing (13) (Figure 3).

4. All-wheel drive according to one of Claims 1 to 3, characterised in that a visco-hydraulic clutch (6) is used as the disc clutch (6), in which a torque increasing with the speed difference is built up due to the liquid shearing forces between the inner discs and outer discs.

5. All-wheel drive according to one of Claims 1 to 3, characterised in that in the clutch disc (6), the torque is transmitted by mechanical friction of the outer discs (12) bearing against the inner discs.

## Revendications

1. Transmission à toutes les roues pour un véhicule automobile avec un accouplement à disques (6) inséré dans la ligne de transmission entre l'essieu avant et l'essieu arrière dont les disques intérieurs (5, 7) transmettent aux disques extérieurs (12) un couple croissant avec la différence entre la vitesse de rotation de l'essieu avant (1) et celle de l'essieu arrière (14), l'accouplement à disques étant précédé d'un réducteur (3) et d'un système à roue libre (8) de telle manière qu'à partir d'une valeur prédéterminée de la différence entres lesdites vitesses la caractéristique de variation du couple en fonction de la différence de vitesse passe automatiquement d'une branche de courbe à croissance lente à une branche croissant plus rapidement (figure 2), caractérisée par le fait que le réducteur (3) est réalisé avec des pignons droits comprenant un pignon d'entrée (2) et une paire de pignons (10, 11) montés parallèlement avec un nombre de dents plus petit, entraînant un pignon (9) monté sur la roue libre (8), ledit pignon d'entrée (2) étant d'une part entraîné par un arbre moteur (1) et d'autre part lié rigidement, par l'intermédiaire d'un arbre central coaxial (4) à des disques intérieurs (5, 7 ou 5), et que le carter (13) de l'accouplement, équipé des disques extérieurs (12) est lié rigidement à un arbre d'entraînement (14).

2. Transmission à toutes les roues selon la revendication 1, caractérisée par le fait qu'un certain nombre des disques intérieurs (5) est lié rigidement au pignon d'entrée (2) et que les autres disques intérieurs (7) sont liés rigidement à la roue libre (figure 1).

3. Commande à toutes les roues selon la revendication 1, caractérisée, par le fait que tous les disques intérieurs (5) tournent avec le pignon d'entrée (2) et que la roue libre (8) est réunie au carter (13) (figure 3).

4. Commande à toutes les roues selon les revendications 1 à 3, caractérisée par le fait que comme accouplement à disques (6) on utilise un accouplement par viscosité (6), les forces de cisaillement du liquide visqueux engendrent entre les disques intérieurs et les disques extérieurs un couple qui croît avec la différence entre les vitesses de rotation.

5. Commande à toutes les roues selon les revendications 1 à 3, caractérisée par le fait que dans l'accouplement à disques (6) le couple est transmis par le frottement mécanique des disques intérieurs contre les disques extérieurs adjacents.

FIG.1

FIG.2

FIG.3

FIG.4